# EUROPÄISCHE PATENTANMELDUNG

(11) **EP 4 201 369 A1**
(43) Veröffentlichungstag der Anmeldung: **28.06.2023**
(21) Anmeldenummer: 22159065.6
(22) Anmeldetag: 28.02.2022
(51) Int. Cl.: A61C 7/08

(54) **KIEFERORTHOPÄDISCHE ZAHNSTELLUNGSREGULIERUNGSEINRICHTUNG**

(30) Priorität: 21.12.2021 DE 202021106975 U
(71) Anmelder: Vali-Pursche, Pouran, 40670 Meerbusch (DE)
(72) Erfinder: Vali-Pursche, Pouran, 40670 Meerbusch (DE)
(74) Vertreter: Haverkamp Patentanwälte PartG mbB

(57) **Zusammenfassung**

Eine kieferorthopädische Zahnstellungsregulierungseinrichtung umfasst eine auf einer Zahnreihe 1 eines Patienten aufsetzbaren und von dieser abnehmbaren Schiene 10, ausgerüstet mit Zahntaschen 11 zur Aufnahme jeweils zumindest eines Zahns Z und mehrere Druckpunktattachments 2, 3, die an dem oder den zu verstellenden Zähnen Z an denjenigen Positionen kraftschlüssig befestigt sind, in die durch die auf die Zahnreihe 1 aufgesetzte und gegen die Druckpunktattachments 2, 3 wirkende Schiene 10 eine Verstellkraft zur Regulierung der Zahnstellung eingeleitet werden soll. An jedem zu verstellenden Zahn sind mehrere Druckpunktattachments angebracht. Typischerweise ist zumindest jeweils eines vestibulär und ein weiteres oral angeordnet. Die an dem oder den Zähnen Z befestigten Druckpunktattachments 2, 3 weisen als Körper zumindest eine zu der Raumlage der Zahnoberfläche, auf der das Druckpunktattachment 2, 3 positioniert ist, geneigte Krafteinleitungsfläche auf. Die Innenseite der Zahntaschen 11 sind zur Aufnahme von Druckpunktattachments 2, 3 tragenden Zähnen Z mit zu den Krafteinleitungsflächen der Druckpunktattachments 2, 3 komplementären Stellflächen 13 in Bezug auf diejenigen Druckpunktattachments 2, 3, auf die durch die Schiene 10 eine Kraft eingeleitet werden soll, ausgerüstet, welche Stellflächen 13 bei aufgesetzter Schiene 10 die Krafteinleitungsflächen der Druckpunktattachments 2, 3 kontaktieren, wobei die innere Weite einer solchen Zahntasche 11 ausgelegt ist, dass bei aufgesetzter Schiene 10 ihre Stellflächen 13 auf die diese kontaktierenden Krafteinleitungsflächen der Druckpunktattachments 2, 3 wirken, sodass die Kraftwirkungsrichtung der Schiene 10 in eine in eine andere Richtung resultierende Krafteinleitungsrichtung in den Zahn Z umgesetzt wird.

## Beschreibung

Gegenstand der Erfindung ist eine kieferorthopädische Zahnstellungsregulierungseinrichtung mit einer auf einer Zahnreihe eines Patienten aufsetzbaren und von dieser abnehmbaren Schiene, ausgerüstet mit Zahntaschen zurAufnahme jeweils zumindest eines Zahns und mit mehreren Druckpunktattachments, die an dem oder den zu verstellenden Zähnen an denjenigen Positionen kraftschlüssig befestigt sind, in die durch die auf die Zahnreihe aufgesetzte und gegen die Druckpunktattachments wirkende Schiene eine Verstellkraft zur Regulierung der Zahnstellung eingeleitet werden soll.

Zur kieferorthopädischen Zahnstellungsregulierung werden unter anderem Zahnschienen eingesetzt, die aus einem dünnen Kunststoffmaterial hergestellt, typischerweise farblos sind und daher, ohne in besonderem Maße in Erscheinung zu treten, ganztägig getragen werden können. Derartige Zahnschienen werden als Aligner-Schienen angesprochen. Die Innenseite der Schiene stellt das Negativ derjenigen Zahnreihe dar, auf den die Zahnschiene aufzusetzen ist. Hierbei kann es sich um mehrere, nebeneinanderliegende Zähne des Zahnbogens oder typischerweise um einen gesamten Zahnbogen handeln. Ausgehend von der aktuellen Zahnstellung für die vorgesehene Zahnstellungsregulierung wird ermittelt, welcher Zahn oder welche Zähne für die gewünschte Zahnstellungsregulierung verstellt werden müssen. Insofern wird eine Zielzahnstellung der Zähne der Zahnreihe moduliert, um im Vergleich zu der aktuellen Zahnstellung der Zähne der Zahnreihe zu bestimmten, welche Zähne für die Zahnstellungsregulierung in welche Richtung bewegt bzw. verstellt werden müssen. Die Verstell- bzw. Bewegungsrichtung eines Zahns wird als Raumvektor definiert. Die Innenseite der Zahnschiene mit ihren Taschen zur Aufnahme jeweils eines Zahns wird unter Berücksichtigung der vorgesehenen Bewegungsvektoren mit Druckpunkten an denjenigen Stellen ausgerüstet, an denen die Kraft für die vorgesehene Verstellung eines Zahns in diesen eingeleitet werden soll. Diese Druckpunkte sind gemäß einer Ausgestaltung noppenartige Erhöhungen, die von der Innenseite einer Tasche der Zahnschiene hervorstehen.

Für die Zahnstellungsregulierung kann der gewünschte Verstellbetrag des oder der Zähne, der durch die Höhe eines solchen von der Innenseite der Zahnschiene abragenden Vorsprunges bestimmt ist, nicht mit einer einzigen Zahnschiene verwirklicht werden, da dann der auf einen solchen Zahn wirkende Druck zu groß wäre, was wiederum den Tragekomfort beeinträchtigt. Aus diesem Grunde werden für eine Zahnstellungsregulierung mit dieser Methode eine Reihe von gemäß dem Behandlungsplan nacheinander zu tragenden Zahnschienen angefertigt, bei denen die Höhe der noppenartigen Druckpunkte von anfänglich geringer Höhe bis zur Zielhöhe in den einzelnen Zahnschienen zunimmt. Jede Zahnschiene wird von dem Patienten solange getragen, bis der Zahn in dem gewünschten Maße verstellt ist. Dann wechselt man auf die Zahnschiene mit dem oder den nächsthöheren Druckpunkten.

Eine solche kieferorthopädische Zahnstellungsregulierung ist für den Patienten nicht unangenehm, kann ganztägig getragen werden und hat nicht die Nachteile festsitzender Zahnstellungsregulierungssysteme, wie beispielsweise Bracket-Systeme. Nachteilig ist bei solchen kieferorthopädischen Zahnstellungsregulierungen jedoch, dass die für eine Zahnverstellung einzubringende Kraft nicht immer exakt an derjenigen Stelle eingeleitet werden kann, wo diese für die Korrektur der Zahnstellung eingeleitet werden soll. Überdies wird es mitunter als aufwendig und kostenträchtig angesehen, dass für eine Zahnstellungsregulierung eine Vielzahl von Zahnschienen mit unterschiedlicher Höhe ihrer Druckpunkte benötigt werden.

Aus KR 101 579 455 B1 ist ein transparentes Zahnstellungsregulierungssystem bekannt, welches sich durch hohen Tragekomfort auszeichnet und dauerhaft punktuell Kraft auf die Zähne ausübt, um die gewünschte Zahnstellungsregulierung vornehmen zu können. Um dieses zu erreichen, werden in die Wandung der Schiene Druckkörper eingesetzt.

Aus US 2009/0191502 A1 ist eine Methode und ein System zur kieferorthopädischen Zahnstellungsregulierung bekannt, wobei eine Zahnschiene mit einzelnen Taschen verwendet wird, welche Taschen über eine spezielle Formgebung, wie beispielsweise Vorsprünge, verfügen, die Kraft auf die zu verstellenden Zähne ausüben.

In WO 2017/006177 A1 ist eine Zweifach-Zahnschiene offenbart, bei welcher eine zweite Zahnschiene die erste Zahnschiene teilweise aufnimmt und in Kombination mit dieser eine Zahnstellungsregulierung herbeiführt.

Aus EP 3 363 405 A1 ist eine kieferorthopädische Zahnstellungsregulierungsanordnung bekannt, bei der zum Zwecke eines punktuellen Einleitens einer Verstellkraft in einen Zahn, resultierend aus der auf die Zahnreihe aufgesetzten Zahnschiene an den zu verstellenden Zähnen an entsprechender Position ein Druckpunktattachment befestigt ist. Über die Aufbauhöhe des oder der Druckpunktattachments kann die auf den Zahn wirkende Kraft eingerichtet werden. Die auf den Zahn einwirkende Kraft resultiert aus der von der Zahnschiene auf das bzw. die Druckpunktattachments ausgeübten Vorspannkraft. Die in die Zähne eingeleitete Kraftwirkungsrichtung ist die Resultierende aus der Richtung der Krafteinleitung durch die Zahnschiene in Zusammenwirkung mit der Raumlage eines solchen Druckpunktattachments.

Aus US 2016/0193014 A1 ist ein weiteres Verfahren zur Zahnstellungsregulierung bekannt, gemäß dem auf die zu verstellenden Zähne ein erstes Moment und ein Gegenmoment hierzu eingeleitet werden. Das eingeleitete Gegenmoment dient zum Reduzieren bzw. der Vermeidung einer Kippbewegung des Zahns. Infolge des Einleitens des Verstellmomentes. Dies erfolgt vor dem Hintergrund, dass bei Einleiten nur eines Momentes der zu verstellende Zahn gekippt wird. Durch das zusätzlich eingeleitet Gegenmoment sollen auch körperliche Bewegungen in mesial-distaler Richtung zum Schließen einer durch Extraktion entstandenen Zahnlücke möglich sein. Die Einleitung eines Momentes erfolgt beispielsweise über ein am Zahn vestibulär angeordnetes Druckpunktattachment. Dieses ist im unteren Bereich der Zahnkrone angeordnet. Ein weiteres Druckpunktattachment dient zum Einleiten des Gegenmomentes. Dieses befindet sich in einem größeren Abstand zur Kippachse als das erste Druckpunktattachment und wirkt in die entgegengesetzte Richtung. Dieses weitere Druckpunktattachment befindet sich im oberen Bereich der Zahnkrone. In der Praxis zeigt sich jedoch, dass sich mit diesem Konzept körperliche Bewegungen des Zahns nicht immer in dem gewünschten Maße durchführen lassen. Überdies sind zumindest die im oberen Bereich der Zahnkrone angeordneten Druckpunktattachments zum Einleiten des jeweiligen Gegenmoments auffällig, wenn die Zahnschiene nicht getragen wird.

Aus US 10 045 835 B1 ist eine weitere kieferorthopädische Zahnstellungsregulierungsanordnung bekannt, mit der die Korrektur der Zahnstellung eines Zahnes mit einem daran angebrachten Druckpunktattachment durch nacheinander zu tragende Zahnschienen in unterschiedliche Richtungen möglich ist. Erreicht wird dieses durch ein im Bereich der Zahnkrone befindliches Druckpunktattachment mit einer konvexen Oberfläche als Krafteinleitungsfläche, wobei der Krümmungsradius zumindest 10 mm beträgt. Diese Ausgestaltung erlaubt es, dass unterschiedliche, nacheinander getragene Zahnschienen an unterschiedlichen Punkten der konvexen Oberfläche eines solchen Druckpunktattachments angreifen können. Zu diesem Zweck verfügt die Zahnschiene über einen planaren Oberflächenabschnitt in der dem zu verstellenden Zahn zugeordneten Zahntasche. Zur Kontrolle der Zahnbewegung kann vorgesehen sein, dass die konvexe Oberfläche eines solchen Druckpunktattachments an unterschiedlichen Stellen von einer in der Zahntasche befindlichen Stellfläche kontaktiert wird. Eine Umsetzung dieses Konzeptes in der Praxis setzt, wenn an ein Druckpunktattachment in unterschiedlichen Richtungen eine Verstellkraft eingeleitet werden soll, eine besonders hohe Präzision in der Herstellung der Zahnschienen voraus. Aufgrund des für die Zahnschienen eingesetzten Materials mit seinen zumindest in einem gewissen Maße elastomere Eigenschaften und dem daraus resultierenden Bewegungsspiel beim Tragen derselben, etwa bei Kaubewegungen, kann eine bestimmungsgemäße Krafteinleitung in den Zahn und damit eine bestimmungsgemäße Verstellung desselben nicht immer gewährleistet werden.

Eine Zahnstellungsregulierung, wie diese ansonsten mit herkömmlichen Bracket-Systemen vorgenommen werden, ist mit den vorbeschriebenen Aligner-Technologien letztendlich nicht zufriedenstellend möglich.

Ausgehend von diesem diskutierten Stand der Technik liegt der Erfindung daher die Aufgabe zugrunde, eine kieferorthopädische Zahnstellungsregulierungseinrichtung der eingangs genannten Art dergestalt weiterzubilden, dass mit dieser auch eine Zahnstellungsregulierung durchgeführt werden kann, die herkömmlich nur mit Bracket-Systemen möglich war.

Gelöst wird diese Aufgabe erfindungsgemäß durch eine kieferorthopädische Zahnstellungsregulierungseinrichtung der eingangs genannten Art, bei der an jedem zu verstellenden Zahn mehrere Druckpunktattachments angebracht sind und bei der die an dem oder den Zähnen befestigten Druckpunktattachments als unsymmetrische Körper mit zumindest einer zu der Raumlage der Zahnoberfläche, auf der das Druckpunktattachment positioniert ist, geneigten Krafteinleitungsfläche aufweist und dass die Innenseite der Zahntaschen zur Aufnahme von Druckpunktattachments tragenden Zähnen mit zu den Krafteinleitungsflächen der Druckpunktattachments komplementären Stellflächen in Bezug auf diejenigen Druckpunktattachments, auf die durch die Schiene eine Kraft eingeleitet werden soll, ausgerüstet sind, welche Stellflächen bei aufgesetzter Schiene die Krafteinleitungsflächen der Druckpunktattachments kontaktieren, wobei die innere Weite einer solchen Zahntasche ausgelegt ist, dass bei aufgesetzter Schiene ihre Stellflächen auf die diese kontaktierenden Krafteinleitungsflächen der Druckpunktattachments wirken, sodass die Kraftwirkungsrichtung der Schiene in eine in eine andere Richtung resultierende Krafteinleitungsrichtung in den Zahn umgesetzt wird.

Die im Rahmen dieser Ausführungen benutzten Begriffe "vestibulär" und "oral" werden jeweils als generische Begriffe für die Außenseite der Zahnreihe (vestibulär) bzw. die Innenseite der Zahnreihe (oral) benutzt und gelten damit unabhängig von Unter- oder Oberkiefer und unabhängig von der Lage innerhalb einer Zahnreihe als Oberbegriff für die Richtungen bukkal/labial bzw. lingual/palatinal.

Von den mehreren, an einem zu verstellenden Zahn angebrachten Druckpunktattachments ist zumindest eines vestibulär und ein weiteres oral angeordnet. Neben den zu verstellenden Zähnen können auch nicht zu verstellende Zähne, die beispielsweise als Widerlager für die Verstellung anderer Zähne vorgesehen sind, mit Druckpunktattachments ausgerüstet sein. Bei diesen Zähnen sind die Druckpunktattachments entsprechend angeordnet, um diese in ihrer Stellung zu halten. Auch bei diesen Zähnen sind von den mehreren Druckpunktattachments zumindest eines vestibulär und ein weiteres oral angeordnet.

Bei dieser kieferorthopädischen Zahnstellungsregulierungseinrichtung sind die Druckpunktattachments einerseits und die Zahnschiene mit ihren Zahntaschen - andererseits - so aufeinander abgestimmt, dass die von der Zahnschiene bereit gestellte Kraftwirkungsrichtung, mit der diese auf die Druckpunktattachments wirkt, an diesen in einer zu der Kraftwirkungsrichtung der Schiene unterschiedliche Richtung umgelenkt wird. Zu diesem Zweck verfügt jedes Druckpunktattachment über eine Krafteinleitungsfläche, gegen die eine zu dieser Krafteinleitungsfläche komplementäre Stellfläche einer Zahntasche der Schiene wirkt. Die Krafteinleitungsfläche eines solchen Druckpunktattachments und die komplementäre, bei aufgesetzter Zahnschiene mit Vorspannung auf die Krafteinleitungsfläche wirkende Stellfläche der Schiene weisen eine Raumlage auf, die gegenüber der Oberfläche des Zahns, an dem das Druckpunktattachment befestigt ist, geneigt, mithin nicht parallel zu dieser ist. Auf diese Weise kann die Kraftwirkungsrichtung der Schiene in eine hiervon unterschiedliche Richtung - die resultierende Kraftwirkungsrichtung - umgelenkt werden. Damit ist somit eine Zahnverstellung nicht nur in vestibulärer/oraler Richtung möglich, sondern vor allem auch in Erstreckung der sagittalen Ebene und damit in distaler bzw. mesialer Richtung. Eine solche Verstellrichtung verläuft in Richtung der Zahnreihe. Je nach Anordnung der Druckpunktattachments mit ihrer zumindest einen Krafteinleitungsfläche und der Auslegung der komplementären Stellflächen der Zahnschiene können quasi beliebige Kraftwirkungsrichtungen für die Verstellung eines Zahnes erzielt werden, mithin auch in eine Richtung, mit der eine wirksame Zahnstellungsregulierung bislang nur mit einem Bracket-System möglich war. Ein zu verstellender Zahn kann somit im Raum dreidimensional verstellt werden. Von besonderem Vorteil dieser Aligner-Technologie ist, dass mehrere oder auch eine Vielzahl von Zähnen gleichzeitig bezüglich ihrer Zahnstellung verstellt werden können. In Abhängigkeit von der Geometrie der jeweils verwendeten Druckpunktattachments mit ihrer jeweils zumindest einen Krafteinleitungsfläche und der Auslegung der komplementären Stellflächen der Zahnschiene können mehrere Zähne auch in unterschiedliche Richtungen verstellt werden. Bei Verstellungen in distaler bzw. mesialer Richtung oder mit einem Anteil der gewünschten Zahnverstellungsrichtung in einer dieser Richtungen wird man für die Behandlung mehrere, nacheinander zu tragende Zahnschienen verwenden, die bezüglich ihrer auf die Druckpunktattachments wirkenden Stellflächen entsprechend ausgelegt sind, um die gewünschte Kraftrichtung in die zu verstellenden Zähne über die daran befestigten Druckpunktattachments einzuleiten. Auf diese Weise können einzelne Zähne oder Zahngruppen auch nacheinander hinsichtlich ihrer Stellung reguliert werden. Unter Ausnutzung des Umstandes, dass für eine solche Zahnstellungsregulierung mehrere Zahnschienen nacheinander getragen werden, wobei das Negativ der Zahnreihe in den Zahntaschen einer nachfolgenden Zahlschiene das Ergebnis der Verstellung der vorangegangenen Zahnschiene berücksichtigt, erlaubt insbesondere auch eine Verstellung einzelner Zähne oder von Zahngruppen im zeitlichen Ablauf des Behandlungsplans nacheinander. Somit können durch Tragen einer oder mehrerer erster Zahnschienen, beispielsweise um Raum für die Verstellung eines Zahns zu schaffen, zunächst benachbarte Zähne verstellt werden, beispielsweise in distaler Richtung, bevor durch eine oder mehrere nachfolgende Zahnschienen der maßgeblich durch die Regulierungsmaßnahme zu verstellende Zahn in den zuvor geschaffenen Raum bewegt wird. Auch wenn sämtliche Zähne bereits von Anfang an mit Druckpunktattachments ausgerüstet sind, sind die Aligner-Schienen hinsichtlich der Konfigurierung ihrer Zahntaschen mit den zu der den Krafteinleitungsflächen komplementären Stellflächen so ausgelegt, dass nur in diejenigen Druckpunktattachments bei aufgesetzter Zahnschiene eine Kraft eingeleitet wird, in die mit dieser Schiene eine Kraft eingeleitet werden soll.

Die Verstellkraft resultiert aus der Vorspannkraft, mit der eine Stellfläche der Zahnschiene gegen die jeweilige Krafteinleitungsfläche eines Druckpunktattachments wirkt. Diese Verstellkraft resultiert aus der Materialeigenschaft der aus einem elastomeren Material hergestellten Zahnschiene. Diese wirkt typischerweise in vestibulärer bzw. oraler Richtung. Unter Ausnutzung der Zahnzwischenräume, in die die Zahnschiene eingreift, können auch diese als Widerlager zum Bereitstellen einer in mesialer bzw. distaler Richtung wirkenden Vorspannung genutzt werden.

Die Stellflächen der Zahnschiene finden sich typischerweise in in die Innenseite einer Zahntasche eingebrachte Attachmenttaschen. Zumindest ein Seitenwandabschnitt einer solchen Attachmenttasche stellt die gegen eine Krafteinleitungsfläche eines Druckpunktattachments wirkende Stellfläche dar, wenn mit dieser Zahnschiene auf den in die Zahntasche aufgenommenen Zahn eine Verstellkraft ausgeübt werden soll. Eine solche Attachmenttasche ist in Verstellrichtung des Zahnes größer bemessen als das darin aufzunehmende Druckpunktattachment, um eine Zahnverstellung und damit eine Verstellung des daran angeschlossenen Druckpunktattachments in der gewünschten Richtung innerhalb der Attachmenttasche zu erlauben. Insofern kann eine solche Attachmenttasche mit ihren in Verstellrichtung laufenden Seitenwänden auch eine seitliche Führung für das darin eingreifende Druckpunktattachment bei dem Vorgang der Zahnverstellung bereitstellen. Durch die Führung des Druckpunktattachments wird die Verstellbewegungsbahn des in diese Zahntasche eingreifenden Zahnes kontrolliert.

Die Druckpunktattachments befinden sich vorzugsweise nur mit geringem Abstand (etwa 1 bis 2 mm) zum Zahnfleisch somit im Bereich des Überganges von der Zahnkrone in den Zahnhals. Ziel ist es, die Druckpunktattachments so nah wie möglich am Zahnfleisch anzuordnen, jedoch ohne dieses zu verletzen. Dieses hat nicht nur zum Vorteil, dass bei abgenommener Zahnschiene aus diesem Grunde bereits die Druckpunktattachments optisch kaum in Erscheinung treten. Zudem befinden sich diese so nah wie möglich an der Zahnwurzel, sodass bereits aus der Anordnung der Druckpunktattachments Zahnkippbewegungen aufgrund des geringeren Hebelarmes deutlich weniger eintreten.

Bei einer solchen Anordnung der Druckpunktattachments befinden sich diese quasi in einer Reihe mit gleichem oder weitgehend gleichem Abstand zum Zahnfleisch.

Von Besonderheit bei dieser Aligner-Technologie ist, dass Zahnstellungskorrekturen möglich sind, die bislang nur mit Brackets und zum Bereitstellen des erforderlichen Raumes, in den die Zähne hinein zu verstellen sind, mit einem Ziehen zumeist der Prämolaren verbunden war. Überdies können mit dieser Aligner-Technologie die Zähne durch die Kraftwirkungsrichtungsumlenkung in verschiedenste Richtungen hinsichtlich ihrer Zahnstellung korrigiert werden. Eine Zahnverstellung ist in sagittaler, horizontaler und vertikaler Ebene ebenso möglich wie Torquebewegungen und Kippungs- bzw. Aufrichtungsbewegungen.

Genutzt wird bei dieser kieferorthopädischen Zahnstellungsregulierungseinrichtung die gewölbte Oberfläche eines Zahns, etwa eines Seitenbackenzahns, für die Positionierung der Druckpunktattachments. Unter Ausnutzung der gewölbten Oberflächenkontur dieser Zähne kann ein und dasselbe Druckpunktattachment durch Anbringen desselben in einer unterschiedlichen Raumlage bezüglich seiner Krafteinleitungsfläche so an der Zahnoberfläche befestigt werden, dass bei aufgesetzter Schiene auf den Zahn die gewünschte Kraftwirkungsrichtung wirkt. Daher werden, auch um die verschiedensten Zahnstellungskorrekturbewegungen vorzunehmen, letztendlich nur eine sehr geringe Anzahl von ihrer Geometrie her unterschiedlicher Druckpunktattachments benötigt. Die Korrektur von Seitenbackenzähnen kann grundsätzlich durch entsprechende Anordnung und Positionierung ein und derselben Druckpunktattachments alle gewünschten Verstellbewegungen erreicht werden. Aufgrund der unterschiedlichen Geometrie der Frontzähne wird man für diese vorzugsweise von ihrer Geometrie her anders ausgelegte Druckpunktattachments verwenden, wenn eine Zahnstellungsregulierung vorgesehen ist.

Die Druckpunktattachments sind typischerweise als unsymmetrische und damit nicht rotationssymetrische Körper konzipiert. Druckpunktattachments für die Seitenbackenzähne können beispielsweise eine dreieckförmige oder trapezförmige Grundfläche aufweisen, wobei sich die größte Höhe dieser Druckpunktattachments im Bereich der geometrischen Basis des Grundkörpers dieser Körper befindet. Die Höhe nimmt in Richtung zu dem der Basis gegenüberliegenden Ende der Druckpunktattachments ab. Bei einem solchen Druckpunktattachment können unterschiedliche Seitenflächen bzw. Seitenflächenabschnitte als Krafteinleitungsflächen genutzt werden. Durch die Asymmetrie weisen diese Seiten eine unterschiedliche Neigung auf. In Abhängigkeit von der gewünschten Krafteinleitung in den Zahn wird ein solches Druckpunktattachment entsprechend am Zahn positioniert. Über die Neigung der genutzten Krafteinleitungsfläche gegenüber der durch die Schiene bereitgestellten Kraftwirkungsrichtung und demzufolge der Neigung der komplementären Stellfläche der Schiene ist die auf den Zahn einwirkende Vorspannung bei aufgesetzter Schiene und damit der durch die Schiene zu bewirkende Verstellbetrag größer oder kleiner. Insofern dient die Kraftumlenkung bzw. -umsetzung zwischen der Stellfläche einer Schiene und der Krafteinleitungsfläche eines Druckpunktattachments ebenfalls zum Einrichten der auf den Zahn wirkenden Vorspannung in der resultierenden Kraftwirkungsrichtung. Die Kraftwirkungsrichtung selbst wird durch die Raumlage der als Abtriebsfläche dienenden Krafteinleitungsfläche eines Druckpunktattachments und der Raumlage der komplementären Stellfläche der Schiene eingerichtet. Die Kraftumsetzung zwischen einer Stellfläche der Schiene und einer Krafteinleitungsfläche eines Druckpunktattachments kann so ausgelegt werden, dass nur ein vektorieller Anteil der durch die Schiene eingeleiteten Kraft für die Zahnverstellung genutzt wird.

Während Druckpunktattachments, wie vorstehend beschrieben, typischerweise für die Seitenbackenzähne und die Prämolaren genutzt werden, wird man, wenn bei Frontzähnen eine Bewegung in distaler Richtung nicht erforderlich ist, für diese quaderförmige Körper als Druckpunktattachments verwenden. Die von der Zahnoberfläche wegweisende Oberfläche ist dann die Krafteinleitungsfläche, durch die durch das Einwirken der komplementären Stellfläche der Schiene eine Kippbewegung des Frontzahnes möglich ist.

Durch die frei wählbare Positionierung der Druckpunktattachments an einem Zahn können an einem Zahn durchaus mehrere Druckpunktattachments angeordnet sein. Typischerweise ist die Kraftwirkungsrichtung der über diese Druckpunktattachments in den Zahn eingeleiteten Kraft in unterschiedliche Richtungen gerichtet. Auf diese Weise können mehrere, an einem Zahn befestigte Druckpunktattachments gemeinsam, also: in der Summe, die auf den Zahn resultierende Kraftwirkungsrichtung bereitstellen. Dieses erlaubt eine Zahnstellungskorrektur in beliebige Raumlagen, insbesondere auch körperliche Bewegungen. Wenn an einem Zahn mehrere Druckpunktattachments dieser Art angeschlossen sind, was die Regel sein dürfte, können diese auch in Bezug auf ihre Kraftwirkungsrichtung dergestalt an unterschiedlichen Positionen am Zahn und zueinander angeordnet sein, dass über zumindest eines dieser Druckpunktattachments eine Verstellkraft in den Zahn eingeleitet wird, während zumindest ein weiteres Druckpunktattachment gegenüber einem vektoriellen Anteil dieser eingeleiteten Kraftrichtung ein Widerlager bildet. Die auf den Zahn resultierende Kraftwirkungsrichtung ist dann durch das Zusammenwirken dieser zumindest zwei Druckpunktattachments bestimmt.

Bei einem Seitenbackenzahn wird man für die Zahnstellungsregulierung zumindest zwei, typischerweise jedoch vier Druckpunktattachments verwenden. Diese werden in approximaler Position lingual und bukkal am Zahn befestigt, mithin an Positionen, die bei abgenommener Zahnschiene durch Dritte nicht oder allenfalls nur bei sehr genauem Hinsehen gesehen werden können.

Das Anordnen der Druckpunktattachments in einer approximalen Position ist auch für die durch die Aligner-Schiene einzuleitende Kraft von Vorteil. In diesen Bereichen ist das Material der Alinger-Schiene zum Ausfüllen der Approximalräume dicker ausgeführt, sodass eine entsprechende höhere, aus der Materialelastizität der Schiene resultierende Vorspannkraft in vestibulärer/oraler Richtung auf die Druckpunktattachments ausgeübt werden kann.

Die Druckpunktattachments sind typischerweise aus einem Komposit-Werkstoff, wie für Zahnreparaturen bekannt, hergestellt, mithin bestehend aus kleinsten Keramik-, Glas- und/oder Quarzpartikeln. Vorgefertigte Druckpunktattachments werden in geeigneter Weise am Zahn befestigt, beispielsweise durch direktes oder indirektes Kleben, mit einem hierfür geeigneten Zement. Durchaus kann ein solches Druckpunktattachment auch am Zahn selbst aufgebaut werden, beispielsweise unter Verwendung einer den pastösen Komposit-Werkstoff enthaltenden Form, die nach Aushärten des Werkstoffes entfernt wird. Bei einem indirekten Kleben wird eine Attachment-Schiene verwendet, in der die an dem bzw. den Zähnen zu positionierenden Attachments integriert sind. Die Kontaktflächen der Druckpunktattachments und/oder der Zahnoberflächen, an denen diese anzubringen sind, sind mit einem geeigneten Kleber vorbehandelt. Nach Aufsetzen der Attachment-Schiene auf den Zahnbogen befinden sich die Attachments an exakt derjenigen Position, an der diese positioniert werden sollen. Ist der Kleber ausgehärtet, kann die Attachment-Schiene entfernt werden. Vorteilhaft bei einer solchen Befestigung der Druckpunktattachments an dem bzw. den Zähnen ist, dass sich die Anordnung derselben innerhalb der Attachment-Schiene exakt an der vorgesehenen Position befindet, die für die gewünschte Zahnverstellung vorgesehen ist. Dieses ist vorteilhaft im Zusammenhang mit der Herstellung der Schienen, da diese anhand eines 3D-Scans der einen oder mehreren Zahnreihen hergestellt werden und auf diese Weise keine Toleranzen bei der Zahnstellungsregulierung, bedingt durch die ansonsten individuelle Befestigung der Druckpunktattachments am Zahn, in Kauf genommen werden müssen. Eine weitere Verbesserung zu engeren Toleranzen kann dadurch erfolgen, dass die Attachments an den Zähnen aufgebaut oder befestigt werden und ein 3D-Scan der mit den Druckpunktattachments ausgerüsteten Zahnreihe die Grundlage für die Herstellung der nacheinander zu tragenden Schienen darstellt.

Vorzugsweise sind sämtliche in einer solchen Schiene aufgenommenen Zähne mit Druckpunktattachments ausgerüstet, ohne dass notwendigerweise sämtliche Zähne verstellt werden sollen. Die Druckpunktattachments sind bei einer solchen Ausgestaltung vestibulär und oral, bei Seitenbackenzähnen vorzugsweise in beiden approximalen Bereichen angeordnet. Dieses erlaubt eine Auslegung einer Schiene, dass von dieser prinzipiell in Abhängigkeit von der Raumlage von in den Zahntaschen befindlichen Stellflächen auf jeden Zahn eine Verstellvorspannung ausgeübt werden kann. Soll ein Zahn nicht verstellt werden, sind die Druckpunktattachments mit ihrer Krafteinleitungsfläche angeordnet bzw. ausgerichtet, dass sich die in die Druckpunktattachments dieses Zahnes durch die Schiene eingeleiteten Kräfte gegenseitig aufheben. Die von der Schiene bereitgestellte Spannkraft ist dann auf die Druckpunktattachments konzentriert, wirkt mithin in jedem Druckpunktattachment mit einer größeren Kraft als wenn die Schiene flächig an der Außenseite eines solchen Zahns anliegt. Vor allem mit einer solchen Ausgestaltung ist es möglich, ein oder mehrere Zähne als Widerlagerzähne einer Zahnreihe zu benutzen, um andere Zähne dieser Zahnreihe in distaler oder mesialer Richtung durch entsprechende Krafteinleitung in ihre Druckpunktattachments zu bewegen.

Innerhalb der Zahntaschen der Schiene können an denjenigen Positionen, an denen ein Druckpunktattachment angeordnet ist, nach unten und somit zum Zahnfleisch hin offene Nuten eingebracht sein, was ein Aufsetzen der Schiene auf den Zahnbogen erleichtert. Möglich ist es auch, die Druckpunktattachments für eine Verrastung der Zahnschiene an dem Zahnbogen durch Hintergreifen einzelner oder aller Druckpunktattachments zu erzielen.

Nachstehend ist die Erfindung unter Bezugnahme auf die beiliegenden Figuren beschrieben. Es zeigen:
- **Fig.1:**: Eine schematische Draufsicht auf eine Hälfte eines Zahnbogens mit daran befestigten Druckpunktattachments,
- **Fig. 2a, 2b:**: ein Druckpunktattachment in zwei unterschiedlichen perspektivischen Ansichten gemäß einer Ausgestaltung zur Verwendung an Seitenbackenzähnen,
- **Fig. 3:**: eine Teilseitenansicht des Zahnbogens der Figur 1 aus vestibulärer Richtung,
- **Fig. 4:**: die Seitenansicht des Zahnbogenausschnittes der Figur 3, ergänzt um Kraftwirkungsrichtungen, eingekoppelt über die Druckpunktattachments in einzelne Zähne des gezeigten Zahnbogens,
- **Fig. 5:**: eine vergrößerte Draufsicht auf einen Zahn des Zahnbogens der Figur 3 und sein Druckpunktattachment zusammen mit dem zur Anlage an die vestibuläre Zahnseite vorgesehenen Teil der Zahnschiene nach Art einer Explosionsdarstellung,
- **Fig. 6:**: eine Draufsicht auf den Zahn der Figur 5 mit einem vestibulär und einem oral angeordneten Druckpunktattachment mit aufgesetzter Zahnschien zur Zahnstellungsregulierung in distaler Richtung und
- **Fig. 7:**: eine Darstellung entsprechend derjenigen des vestibulären Teils der Figur 6 bei einer Verstellung des Zahnes gemäß einer anderen vorgesehenen Zahnverstellung.

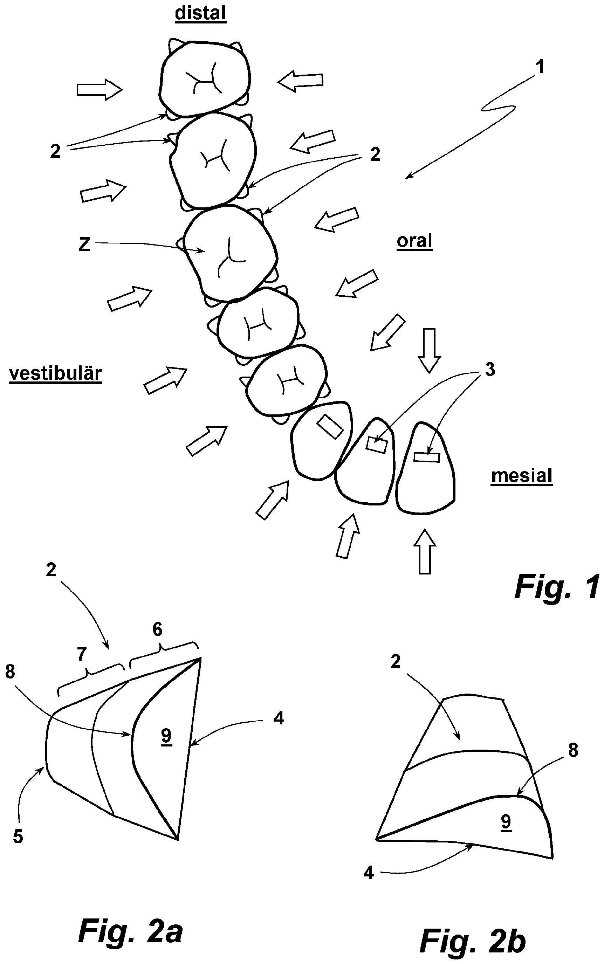

Figur 1 zeigt beispielhaft eine Reihe von nebeneinanderliegenden Zähnen, eine Zahnreihe 1. Bei der Zahnreihe 1 handelt es sich um einen halben Zahnbogen. Die Zahnstellung einiger Zähne dieses Zahnbogens soll korrigiert werden. Dieses erfolgt mit der sogenannten Aligner-Technologie. Eine typischerweise aus transparentem Kunststoff gefertigte Aligner-Schiene (in den Figuren nicht dargestellt) dient zum Bereitstellen der notwendigen Verstellkräfte. Eine solche Aligner-Schiene ist aus einem Kunststoffmaterial hergestellt und weist, wie dieses auch bei herkömmlichen Aligner-Schienen der Fall ist, in gewissem Maße elastische Eigenschaften auf. Eine solche Aligner-Schiene verfügt über unterseitig und somit zum Zahnfleisch der Zahnreihe 1 hin offene Zahntaschen. Ist die Aligner-Schiene auf eine Zahnreihe aufgesetzt, sind die Zähne der Zahnreihe darin aufgenommen. Typischerweise erstreckt sich eine Aligner-Schiene über den kompletten Zahnbogen. Die Zahntaschen der Aligner-Schiene weisen eine Negativstruktur zu den Zähnen der Zahnreihe auf. Die zum Verstellen der Zähne oder auch einzelner Zähne erforderliche Vorspannung resultiert aus der Materialelastizität der Aligner-Schiene, die unter Vorspannung gegen zumindest die zu verstellenden Zähne wirkt. Die beiden voneinander beabstandeten Schenkel der Schiene - einer befindet sich vestibulär, der andere oral - sind durch einen sich über die Kaufläche der Zähne erstreckenden Steg miteinander verbunden.

Diejenigen Zähne, in die durch die Aligner-Schiene eine Vorspannung einwirken soll, tragen an vordefinierten Stellen Druckpunktattachments 2, 3. Über diese wird, begrenzt auf die Grundfläche eines solchen Druckpunktattachments, eine Kraft, resultierend aus der Vorspannung der Aligner-Schiene in den jeweiligen Zahn eingekoppelt.

In der Figur sind die kieferorthopädischen Richtungen angegeben, wobei die Richtung "vestibulär" als Oberbegriff für die Richtungen bukkal und labial anzusehen ist. Die Richtung "oral" wird als Oberbegriff für die Richtungen lingual und palatinal verwendet. Distal ist diejenige Richtung, die von der Kiefermitte entfernt ist bzw. wegweist, während mesial die entgegengesetzte, zur Kiefermitte weisende Richtung ist.

Zusätzlich ist in Figur 1 schematisiert mit Blockpfeilen die Kraft einer Aligner-Schiene dargestellt, wie diese auf die Zahnreihe 1 wirkt. Diese wirkt grundsätzlich in vestibulärer und oraler Richtung und somit quer zur Erstreckung des Zahnbogens und damit quer zu den Richtungen distal/mesial. Eine Aligner-Schiene kann auch dergestalt gefertigt werden, dass von dieser eine Vorspannung in distaler bzw. mesialer Richtung in einem gewissen Maß erfolgt, wenn ein oder mehrere Zähne der Zahnreihe als Widerlagerzähne genutzt werden.

Die für die kieferorthopädische Zahnstellungsregulierung genutzten Einzelteile sind die Druckpunktattachments 2, 3 und die Aligner-Schiene.

Die Druckpunktattachments 2, 3 dienen dem Zweck, die von der Aligner-Schiene bereitgestellte Spannkraft, die grundsätzlich in vestibulärer bzw. oraler Richtung wirkt, in eine Kraftwirkungsrichtung umzulenken, damit die gewünschte Verstell- bzw. Korrekturbewegung des jeweiligen Zahns erreicht wird. Bei dem in den Figuren dargestellten Ausführungsbeispiel tragen die Backenzähne jeweils vier Druckpunktattachments 2, und zwar jeweils zwei vestibulär und zwei oral, und zwar jeweils in approximaler Stellung. Die Ausstattung sämtlicher Zähne mit Druckpunktattachments bedeutet nicht, dass alle Zähne verstellt werden sollen. Welche Zähne zu welchem Zeitpunkt des Behandlungsplans verstellt werden, wird durch die Auslegung der nacheinander zu tragenden Aligner-Schienen bestimmt. Somit können einzelne Zähne der Zahnreihe 1 auch als Widerlagerzähne genutzt werden, die bei der Zahnstellungskorrektur nicht verstellt werden. Auch bezüglich dieser Zähne sind die Aligner-Schienen ausgelegt, damit über die an diesen Zähnen befestigten Druckpunktattachments ebenfalls eine Vorspannkraft eingekoppelt wird, jedoch ohne eine resultierende Kraftwirkungslinie, da sich die eingeleiteten Kräfte gegenseitig aufheben. In einer solchen durch die Schiene eingespannten Stellung ist die Zahnposition eines solchen Zahnes besser fixiert, als wenn dieser Zahn ohne Druckpunktattachments in einer Zahntasche der Schiene aufgenommen wäre.

Um die gewünschte Kraftwirkungsrichtung in den Zahn über ein Druckpunktattachment einzuleiten, sind die Druckpunktattachments 2, 3 ausgelegt, dass diese wenigstens eine Krafteinleitungsfläche aufweisen. In den Figuren 2a, 2b ist ein Druckpunktattachment 2 in unterschiedlichen perspektivischen Ansichten gezeigt. Das Druckpunktattachment 2 weist eine trapezförmige Grundfläche auf. Die Basis ist darin mit dem Bezugszeichen 4 kenntlich gemacht. Die Grundfläche des Druckpunktattachments 4 verjüngt sich zu dem der Basis 4 gegenüberliegenden Ende 5 hin, und zwar bei dem dargestellten Ausführungsbeispiel in zwei Stufen bzw. Abschnitten. In einem ersten Abschnitt 6 ist der Verjüngungswinkel der an die Basis 4 grenzenden Schenkel geringer als in dem zweiten, sich bis zum Ende 5 erstreckenden Abschnitt 7. Das Druckpunktattachment 2 weist seine größte Höhe gegenüber der Grundfläche im Bereich der Basis 4 auf. Bei dem dargestellten Ausführungsbeispiel hat das Druckpunktattachment 2 seine größte Höhe im Scheitel 8 des konvexartig gewölbten Querschnittes parallel zur Basis 4. Die Höhe des Druckpunktattachments 2 nimmt in Richtung zu dem Ende 5 hin ab, und zwar ebenfalls in zwei Stufen, wobei der Verjüngungswinkel in dem Abschnitt 6 geringer ist als in dem Abschnitt 7.

Die Grundfläche selbst ist in Anpassung an die Wölbung des Zahns, an dem das Druckpunktattachment 2 befestigt wird, angepasst oder entsprechend mit Zement oder Komposit-Material unterfüttert. Das Druckpunktattachment 2 ist aus einem für einen Zahnaufbau geeigneten Komposit-Material, vorzugsweise in der Farbe des Zahns hergestellt.

Aufgrund der vorbeschriebenen Formgebung ist das Druckpunktattachment 2 unsymmetrisch und bildet einen unregelmäßigen Körper. Beginnend an der Basis 4 und sich erstreckend bis zu dem Scheitel 8 weist das Druckpunktattachment 2 eine ebene Frontfläche 9 auf. Sowohl die Frontfläche 9 als auch die sich daran anschließenden Mantelflächenabschnitte der Wölbung können als Krafteinleitungsflächen zum Einkoppeln einer durch die Aligner-Schiene bereitgestellten Stellkraft verwendet werden. Die Wölbung der Außenseite eines Seitenbackenzahns kann genutzt werden, um, wenn eine Stellkrafteinkopplung über die Frontfläche 9 in das Druckpunktattachment 2 erfolgen soll, diese in die gewünschte Raumlage anzuordnen. Selbstverständlich kann die Frontfläche 9 selbst gegenüber der Grundfläche geneigt sein.

Für die Zahnstellungskorrektur der Zahnreihe 1 sollen die die vorderen Seitenzähne im Raum, d.h. dreidimensional für die gewünschte Zahnstellungskorrektur verstellt werden. Dieses umfasst bei einigen dieser Zähne auch eine Bewegung derselben in distaler oder mesialer Richtung.

Die Aligner-Schienen, mit denen die Zähne der Zahnreihe 1 hinsichtlich ihrer Stellung korrigiert werden sollen, sind ausgelegt, dass die Zahntaschen an denjenigen Stellen, an denen die Druckpunktattachments 2 darin aufgenommen sind, zu der jeweils gewünschten Krafteinleitungsfläche, beispielsweise der Frontfläche 9, komplementäre Stellflächen aufweisen. Diese sind ebenfalls gegenüber der Kraftwirkungsrichtung der Schiene (vestibulär/oral) geneigt und kontaktieren die jeweils für die Krafteinleitung eines Druckpunktattachments 2 vorgesehene Krafteinleitungsfläche, beispielsweise die Frontfläche 9. Aufgrund der Vorspannung, mit der die Aligner-Schienen-seitigen Stellflächen auf die Krafteinleitungsflächen der Druckpunktattachments 2 wirken, ist die für die Verstellbewegung erforderliche Kraft bereitgestellt. Die resultierende Kraftwirkungsrichtung, mit der ein Zahn verstellt wird, ergibt sich aus der Summe der in die vestibulär und oral angeordneten Druckpunktattachments in Bezug auf die Raumlage ihrer Krafteinleitungsflächen. Auf diese Weise können komplexe Kraftwirkungsrichtungen in einen Zahn für dessen Zahnstellungskorrektur eingeleitet werden. Die in ein Druckpunktattachment eines Zahns eingeleitete Kraft kann aufgrund unterschiedlicher Auslegung bzw. Anordnung der Krafteinleitungsflächen und der komplementären Stellflächen der Aligner-Schiene unterschiedlich vorgesehen sein. Möglich ist auch, dass Druckpunktattachments an bestimmten Zahnpositionen befestigt sind, um einen vektoriellen Anteil einer in ein oder mehrere andere Druckpunktattachments eingeleiteten Verstellkraft als Widerlager aufzufangen, beispielsweise um eine Kippbewegung des Zahns zu verhindern.

Für die Zahnstellungskorrektur werden mehrere, nacheinander zu tragende Aligner-Schienen benötigt. Eine zum Tragen vorgesehene nachfolgende Aligner-Schiene ist an den Korrekturerfolg der vorangegangenen Aligner-Schiene angepasst. Durch die mehrere nacheinander anzuwendenden Aligner-Schienen besteht die Möglichkeit, dass die zu verstellenden Zähne nicht gleichzeitig, sondern einzeln oder auch in Gruppen nacheinander verstellt werden, obwohl von Anfang an sämtliche zu verstellenden Zähne mit Druckpunktattachments 2, 3 ausgerüstet sind. Ist in einer ersten Phase der Zahnstellungskorrektur die Verstellung eines oder mehrerer Zähne noch nicht gewünscht, sind in diesen Aligner-Schienen für die Druckpunktattachments dieser Zähne entsprechend keine komplementären Stellflächen in den diesbezüglichen Zahntaschen vorgesehen.

Im Bereich der Frontzähne sind die Druckpunktattachments quaderförmig ausgelegt (siehe Figur 1).

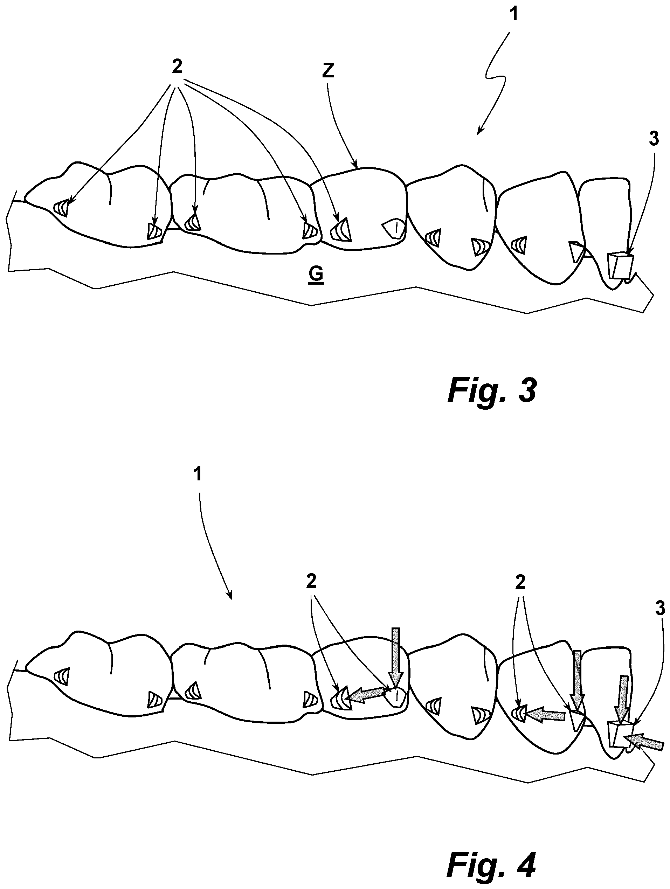

Figur 3 zeigt die Zahnreihe 1 aus vestibulärer Blickrichtung. Die unterschiedliche Raumlage und Anordnung der Druckpunktattachments 2 ist darin erkennbar. Die Druckpunktattachments 2, 3 sind mit geringem Abstand zum Zahnfleisch (Gingiva G) angeordnet. Die Raumlage der Druckpunktattachments 2, 3 dient nur zur Darstellung der Anordnung und der Wirkungsweise. Bei dem dargestellten Ausführungsbeispiel befinden sich die Druckpunktattachments 2, 3 mit einem Abstand von etwa 1 bis 1,5 mm zur Gingiva G.

Bei dem dargestellten Ausführungsbeispiel sind die vestibulär und oral angeordneten Druckpunktattachments 2 so ausgelegt, dass diese beiden Zähne als Widerlagerzähne genutzt werden, mithin als Zähne, gegen die andere Zähne der Zahnreihe 1 in distaler Richtung bewegt werden. Dies bedeutet, dass diese Zähne beim Tragen einer Aligner-Schiene nicht verstellt werden.

Beispielhaft sind in Figur 4 die Kraftwirkungsrichtungen zu einzelnen Druckpunktattachments von zu verstellenden Zähnen durch Blockpfeile kenntlich gemacht, die über einzelne Druckpunktattachments 2, 3 in den jeweiligen Zahn eingeleitet werden. Aus diesen Kraftwirkungsrichtungen resultiert die Verstellbewegung des Zahns. Zu berücksichtigen ist, dass die Zähne auch oral Druckpunktattachments tragen. Dieses ist von Bedeutung, da bei der gewünschten Verstellrichtung eines solchen Zahns einzelne Druckpunktattachments als Konterpunkte genutzt werden, um bei der Zahnverstellung ein Kippen zu vermeiden, wenn dieses nicht gewünscht ist.

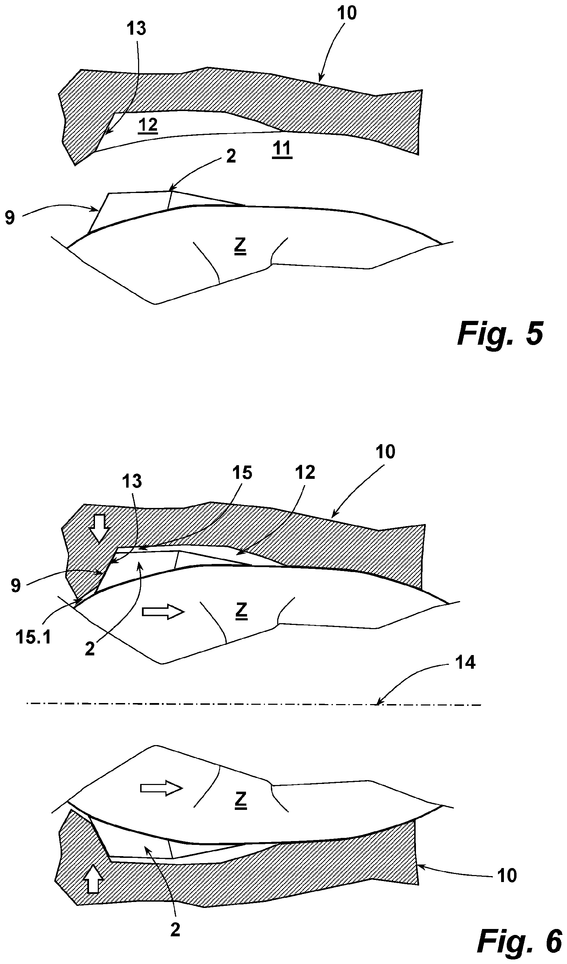

Figur 5 zeigt exemplarisch eine Draufsicht auf einen Zahn des Zahnbogens 1, und zwar auf den Zahn Z der Figur 3 mit seinem vestibulären Druckpunktattachment 2. Die als Krafteinleitungsfläche dienende Frontfläche 9 weist in mesiale Richtung. Zusammen mit dem vestibulären Außenabschnitt des Zahnes Z ist in Figur 5 der dem Zahn Z zugeordnete Teil einer Zahnschiene 10 dargestellt. Die Zahnschiene 10 verfügt über Zahntaschen 11. Die zu dem Zahn Z weisende Oberfläche der Zahntasche 11 der Zahnschiene 10 liegt bei aufgesetzter Zahnschiene 10 an der Außenseite des Zahns Z an. In die Zahntasche 11 ist eine Attachmenttasche 12 eingebracht. Bei aufgesetzter Zahnschiene 10 sitzt in dieser das Druckpunktattachment 2. Die Attachmenttasche 12 ist in Richtung ihrer distal-mesialen Erstreckung größer als die diesbezügliche Länge des Druckpunktattachments 2. Komplementär zur Frontfläche 9 des Druckpunktattachments 2 verfügt die Attachmenttasche 12 über eine hierzu komplementäre Stellfläche 13. Diese bildet einen Seitenwandabschnitt der Attachmenttasche 12.

Figur 6 zeigt die auf den Zahnbogen 1 und damit auch auf den Zahn Z aufgesetzte Zahnschiene 10. Der Zahn Z des dargestellten Ausführungsbeispiels trägt neben seinem vestibulären Druckpunktattachment 2 ein weiteres Druckpunktattachment 2 an oraler Seite. Diese sind bezüglich der Sagittalebene 14 des Zahnbogens 1 einander gegenüberliegend angeordnet. Die Attachmenttasche 12 der Zahnschiene 10 ist im Bereich ihrer Stellfläche 13 ausgelegt, damit der die Stellfläche 13 tragende Abschnitt etwas Spiel in oraler Richtung hat, um in Richtung zur Außenseite des Zahns Z bewegt werden zu können. In der in Figur 6 gezeigten Stellung wirkt die Stellfläche 13 unter Vorspannung auf das vestibuläre Druckpunktattachment 2. Insofern liegt weder die Attachmenttasche 12 an der Außenseite des Druckpunktattachments 2 noch dem zu der Zahntasche 11 zu der Attachmenttasche 12 benachbarte Abschnitt an der Außenseite des Zahnes an. Die diesbezüglichen Zwischenräume sind in Figur 6 in Bezug auf den vestibulären Teil der Zahntasche 11 mit 15 bzw. 15.1 kenntlich gemacht.

Der orale Teil der Zahnschiene 10 ist genauso ausgebildet wie der vorbeschriebene vestibuläre Teil.

Infolge der auf die Krafteinleitungsflächen der beiden Druckpunktattachments 2 durch die Zahnschiene 10 ausgeübten Stellkraft, die bei dem dargestellten Ausführungsbeispiel in vestibulär-oraler Richtung wirkt, führt dieses infolge der symmetrischen Anordnung der Druckpunktattachments 2 an vestibulärer und oraler Seite des Zahns Z zu einer auf den Zahn Z wirkenden Kraftwirkungsrichtung in distaler Richtung, wie durch die Blockpfeile kenntlich gemacht. Um eine Kippbewegung des Zahns Z zu vermeiden, dienen die beiden weiteren Druckpunktattachments 2 des Zahns Z, welche Druckpunktattachments 2 angeordnet und ausgelegt sind, damit bei aufgesetzter Aligner-Schiene in den Zahn Z ein einer Kippbewegung entgegengerichtetes Moment eingeleitet wird. In Figur 6 sind diese nicht dargestellt.

Durch die größere Länge der Attachmenttaschen 12 in distaler Richtung, verglichen mit der diesbezüglichen Erstreckung der Druckpunktattachments 2 ist eine Bewegung des Zahns Z in dieser Richtung nicht blockiert.

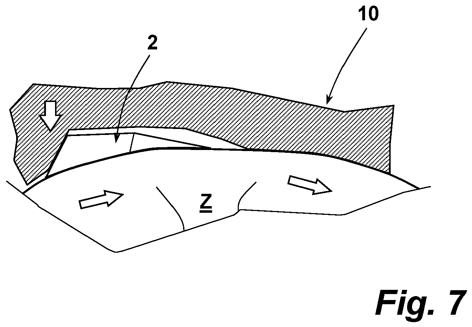

Figur 7 zeigt beispielhaft den Zahn Z in einer Darstellung entsprechend derjenigen des vestibulären Teilbereiches der Figur 6, jedoch nur mit einem Druckpunktattachment 2 an seiner vestibulären Außenseite zum Zwecke einer anderen Zahnverstellung. Bei aufgesetzter Zahnschiene 10 resultiert dieses zu einer gewissen Drehung des Zahns Z, wie durch die Blockpfeile in Figur 7 angedeutet.

Aufgrund der Kraftumlenkung bzw. -umsetzung von der Spannrichtung der Aligner-Schiene (vestibulär-oral und/oder distal-mesial) in eine effektive Kraftwirkungsrichtung, die sich von dieser Spannrichtung unterscheidet, können komplexe Zahnbewegungen problemlos durchgeführt werden. Dieses erlaubt vor allem auch eine Verstellung von Zähnen in distaler und mesialer Richtung. Durch die Anordnung der Druckpunktattachments kann der damit ausgerüstete Zahn dreidimensional verstellt werden.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass derartige weitere Ausgestaltungen im Rahmen dieser Ausführungen im Einzelnen näher beschrieben werden müssten.

### Bezugszeichenliste

- 1: Zahnreihe
- 2: Druckpunktattachment
- 3: Druckpunktattachment
- 4: Basis
- 5: Ende
- 6: Abschnitt
- 7: Abschnitt
- 8: Scheitel
- 9: Frontfläche
- 10: Zahnschiene
- 11: Zahntasche
- 12: Attachmenttasche
- 13: Stellfläche
- 14: Sagittalebene
- 15, 15.1: Zwischenraum

- Z: Zahn
- G: Zahnfleisch/Gingiva

## Patentansprüche

1. Kieferorthopädische Zahnstellungsregulierungseinrichtung mit einer auf einer Zahnreihe (1) eines Patienten aufsetzbaren und von dieser abnehmbaren Schiene (10), ausgerüstet mit Zahntaschen (11) zur Aufnahme jeweils zumindest eines Zahns (Z) und mit mehreren Druckpunktattachments (2, 3), die an dem oder den zu verstellenden Zähnen (Z) an denjenigen Positionen kraftschlüssig befestigt sind, in die durch die auf die Zahnreihe (1) aufgesetzte und gegen die Druckpunktattachments (2, 3) wirkende Schiene (10) eine Verstellkraft zur Regulierung der Zahnstellung eingeleitet werden soll, **dadurch gekennzeichnet, dass** an jedem zu verstellenden Zahn mehrere Druckpunktattachments angebracht sind und dass die an dem oder den Zähnen (Z) befestigten Druckpunktattachments (2, 3) als Körper mit zumindest einer zu der Raumlage der Zahnoberfläche, auf der das Druckpunktattachment (2, 3) positioniert ist, geneigten Krafteinleitungsfläche aufweist und dass die Innenseite der Zahntaschen (11) zur Aufnahme von Druckpunktattachments (2, 3) tragenden Zähnen (Z) mit zu den Krafteinleitungsflächen der Druckpunktattachments (2, 3) komplementären Stellflächen (13) in Bezug auf diejenigen Druckpunktattachments (2, 3), auf die durch die Schiene (10) eine Kraft eingeleitet werden soll, ausgerüstet sind, welche Stellflächen (13) bei aufgesetzter Schiene (10) die Krafteinleitungsflächen der Druckpunktattachments (2, 3) kontaktieren, wobei die innere Weite einer solchen Zahntasche (11) ausgelegt ist, dass bei aufgesetzter Schiene (10) ihre Stellflächen (13) auf die diese kontaktierenden Krafteinleitungsflächen der Druckpunktattachments (2, 3) wirken, sodass die Kraftwirkungsrichtung der Schiene (10) in eine in eine andere Richtung resultierende Krafteinleitungsrichtung in den Zahn (Z) umgesetzt wird.

2. Kieferorthopädische Zahnstellungsregulierungseinrichtung nach Anspruch 1, **dadurch gekennzeichnet, dass** die Druckpunktattachments (2, 3) im Bereich des Überganges von der Zahnkrone in den Zahnhals, mit geringem Abstand zum Zahnfleisch (G) angeordnet sind.

3. Kieferorthopädische Zahnstellungsregulierungseinrichtung nach Anspruch 1 oder 2, **dadurch gekennzeichnet, dass** von den mehreren Druckpunktattachments an einem zu verstellenden Zahn zumindest eines vestibulär und ein weiteres oral angeordnet sind.

4. Kieferorthopädische Zahnstellungsregulierungseinrichtung nach einem der Ansprüche 1 bis 3, **dadurch gekennzeichnet, dass** die Druckpunktattachments (2) eine dreieckförmige oder trapezförmige, insbesondere gleichschenklige Grundfläche aufweisen, sich die größte Höhe der Druckpunktattachments im Bereich der Basis (4) befindet und diese Höhe in Richtung zu dem der Basis (4) gegenüberliegenden Ende (5) der Grundfläche abnimmt.

5. Kieferorthopädische Zahnstellungsregulierungseinrichtung nach einem der Ansprüche 1 bis 4, **dadurch gekennzeichnet, dass** die Druckpunktattachments (2) eine konvexartig gewölbte Querschnittsgeometrie an ihrer von der Basis wegweisenden Seite aufweisen.

6. Kieferorthopädische Zahnstellungsregulierungseinrichtung nach einem der Ansprüche 1 bis 5, **dadurch gekennzeichnet, dass** die auf die Krafteinleitungsflächen der Druckpunktattachments (2, 3) wirkenden Stellflächen (13) der Schiene (10) ihrerseits Flächen von in die Zahntaschen (11) eingebrachten Attachmenttaschen (12) sind.

7. Kieferorthopädische Zahnstellungsregulierungseinrichtung nach Anspruch 6, **dadurch gekennzeichnet, dass** die Erstreckung einer solchen Attachmenttasche (12) in Verstellrichtung des darin eingreifenden Druckpunktattachments (2, 3) größer ist als die diesbezügliche Erstreckung des Druckpunktattachments (2, 3).

8. Kieferorthopädische Zahnstellungsregulierungseinrichtung nach einem der Ansprüche 1 bis 7, **dadurch gekennzeichnet, dass** zumindest eine Krafteinleitungsfläche eines Druckpunktattachments (2, 3) eben ausgeführt ist.

9. Kieferorthopädische Zahnstellungsregulierungseinrichtung nach einem der Ansprüche 1 bis 8, **dadurch gekennzeichnet, dass** zumindest eine Krafteinleitungsfläche eines Druckpunktattachments (2) gekrümmt ausgeführt ist.

10. Kieferorthopädische Zahnstellungsregulierungseinrichtung nach einem der Ansprüche 1 bis 9, **dadurch gekennzeichnet, dass** als Druckpunktattachments (3) quaderförmige Körper vorgesehen sind, bei denen die von der Zahnoberfläche wegweisende Oberfläche die Krafteinleitungsfläche ist.

11. Kieferorthopädische Zahnstellungsregulierungseinrichtung nach einem der Ansprüche 1 bis 10, **dadurch gekennzeichnet, dass** an einem bezüglich seiner Stellung zu regulierenden Zahn mehrere Druckpunktattachments (2, 3) befestigt sind, wobei die jeweilige Kraftwirkungsrichtung der über die Druckpunktattachments (2, 3) in den Zahn eingeleiteten Kraft in unterschiedliche Richtungen weist.

12. Kieferorthopädische Zahnstellungsregulierungseinrichtung nach Anspruch 11, **dadurch gekennzeichnet, dass** an einem Zahn zumindest zwei Druckpunktattachments (2, 3) bezüglich ihrer Kraftwirkungsrichtung dergestalt an unterschiedlichen Positionen zueinander angeordnet sind, dass über zumindest eines eine Verstellkraft in den Zahn eingeleitet wird, während zumindest ein weiteres gegenüber einem vektoriellen Anteil dieser eingeleiteten Kraftwirkungsrichtung ein Widerlager bildet, sodass die hieraus in den Zahn eingeleitete resultierende Kraftwirkungsrichtung durch das Zusammenwirken dieser zumindest zwei Druckpunktattachments (2, 3) bestimmt ist.

13. Kieferorthopädische Zahnstellungsregulierungseinrichtung nach einem der Ansprüche 1 bis 12, **dadurch gekennzeichnet, dass** zusätzlich zu den zu verstellenden Zähnen zumindest ein in der Schiene aufgenommener Zahn als Widerlager für die über die Schiene in den oder die zu verstellenden Zähne eingeleitete Verstellkraft dient und dieser zumindest eine Widerlagerzahn ebenfalls mit Druckpunktattachments ausgerüstet ist, die bezüglich der durch diese bewirkte Krafteinleitungsrichtung dergestalt angeordnet und/oder ausgelegt sind, dass dieser zumindest eine Zahn die durch auf die Zahnreihe aufgesetzte Schiene nicht verstellt wird.

14. Kieferorthopädische Zahnstellungsregulierungseinrichtung nach einem der Ansprüche 1 bis 13, **dadurch gekennzeichnet, dass** sämtliche in der Schiene aufgenommenen Zähne mit Druckpunktattachments ausgerüstet sind, wobei die Frontzähne zwei Druckpunktattachments tragen, von denen eines vestibulär und eines oral angeordnet ist, und an den die Backenzähnen jeweils vier Druckpunktattachments befestitgt sind, von denen jeweils zwei vestibulär und zwei oral in jeweils approximaler Position angeordnet sind.

15. Kieferorthopädische Zahnstellungsregulierungseinrichtung nach Anspruch 14, **dadurch gekennzeichnet, dass** die vestibulär und oral angeordneten Druckpunktattachments sich bezüglich der Sagittalebene (14) an gegenüberliegenden Positionen befinden.
